# FASCICULE DE BREVET EUROPEEN

(11) **EP 0 821 169 B1**
(45) Date de publication et mention de la délivrance du brevet: **17.12.2003**
(21) Numéro de dépôt: 97420122.0
(22) Date de dépôt: 17.07.1997
(51) Int. Cl.: F16C 1/22

(54) **Dispositif de compensation pour une commande à distance mécanique, comportant un câble coulissant dans une gaine**
Nachstellvorrichtung für einen Bowdenzug
Compensation device for a mechanical remote control comprising a cable sliding in a conduit

(30) Priorité: 26.07.1996 FR 9609683
(43) Date de publication de la demande: 28.01.1998
(73) Titulaire: Société Europeenne de Fabrications Industrielles SEFI, 38210 Tullins (FR)
(72) Inventeur: Baffert, Didier, 38210 Saint Quentin sur Isere (FR); Ferron, Michel, 38500 Voiron (FR)
(74) Mandataire: Maureau, Philippe

(56) Documents cités:
- WO-A-95/01514
- FR-A- 449 157
- FR-A- 1 221 158
- GB-A- 2 206 663
- US-A- 3 960 032

## Description

La présente invention a pour objet un dispositif de compensation pour une commande à distance mécanique, comportant un câble coulissant dans une gaine.

Les commandes à distance mécaniques sont généralement réalisées à l'aide d'une tringlerie ou bien d'un câble coulissant dans une gaine. La seconde option permet plus de souplesse et de par la flexibilité du câble et de sa gaine, permet de passer à travers des zones encombrées par divers dispositifs dans lesquelles il est difficile de faire passer une tringlerie.

Ce type de commande à distance est utilisé dans de nombreux domaines industriels, comme par exemple dans l'industrie automobile. Dans un véhicule, on peut retrouver une commande par câble par exemple au niveau de l'accélérateur, de l'ouverture du capot, mais aussi pour l'ouverture des portières ou le réglage des sièges.

Un câble de commande est relié par l'une de ses extrémités à l'organe à commander et son autre extrémité est actionnable par un dispositif de commande. Entre cet organe et ce dispositif, le câble passe dans une gaine sur une partie au moins de sa longueur. Cette gaine est maintenue par des supports.

Il est connu, dans certains cas, de monter l'extrémité du câble du côté de la commande dans un tube guide. En agissant sur ce tube, il est possible d'actionner l'organe à commander.

Cependant, le câble entre l'organe à commander et le dispositif de commande peut prendre du jeu. Pour éviter ce jeu, il est connu de placer un ressort entre une gaine et l'un de ses supports afin de mettre le câble sous tension. Pour garantir une tension en permanence, il est nécessaire de réaliser un réglage au niveau de ce ressort pour tenir compte des divers jeux existant et pouvant apparaître en cours d'utilisation. De plus, malgré le réglage initial, la tension du câble peut varier au cours de sa durée de vie.

Même lorsque le câble est sous tension, il est nécessaire de prévoir au niveau de la commande une course plus longue que celle nécessaire au niveau de l'organe à commander afin d'être sûr que toute la course côté organe est utilisée et ainsi permettre un bon fonctionnement de l'organe commandé. Pour obtenir une telle course supplémentaire, ou surcourse, il est connu de placer un ressort précontraint dans un boîtier, entre la gaine ou le câble, et l'organe à commander. Ce ressort a une raideur suffisante pour offrir une résistance plus grande que celle qu'offre l'organe à commander. Ainsi, en agissant sur le câble, au début de la course, le câble actionne l'organe à commander, puis en fin de course, lorsque l'organe à commander est déplacé, le ressort monté à l'intérieur du boîtier se comprime, permettant la surcourse.

Le document GB 2 206 663 A montre un autre dispositif de commande dont la construction correspond au préambule de la revendication 1. Dans ce dispositif un réglage automatique est réalisé avec un second ressort de raideur sensiblement inférieure à celle d'un premier ressort, agissant entre le boîtier et un organe de serrage, qui sert à l'immobilisation du câble par rapport au boîtier.

L'invention a pour but de fournir un dispositif de compensation pour une commande à distance mécanique ne nécessitant pas de réglage, permettant d'avoir une surcourse et d'exercer constamment une tension sur le câble même lorsque le dispositif de commande est en position de repos.

A cet effet, le dispositif qu'elle propose est un dispositif de compensation pour une commande à distance mécanique, comportant un câble coulissant dans une gaine, un tube guide dans lequel passe le câble, un boîtier pouvant coulisser par rapport au tube guide et un premier ressort précontraint monté entre le boîtier et le tube guide.

Selon l'invention, un second ressort, de raideur sensiblement inférieure à celle du premier ressort, agit entre le câble ou sa gaine et le tube guide, et une butée est prévue à l'intérieur du tube guide pour l'extrémité du câble ou de la gaine.

Ainsi, le second ressort assure qu'une tension est constamment exercée sur le câble. En agissant sur le dispositif de commande, le second ressort est tout d'abord comprimé car sa raideur est moindre et la tension du câble augmente. Lorsque l'extrémité du câble ou de la gaine arrive en butée, le ressort est précontraint d'une façon prédéterminée par la position de la butée. La tension est donc toujours la même à la fin de cette première phase d'action sur le dispositif.

Une fois que l'extrémité du câble ou la gaine est en butée et que l'action sur le dispositif de commande continue, le second ressort ne peut plus se comprimer et il tire un organe à commander qui se déplace depuis une position de repos vers une position active.

En fin de course de l'organe à commander, appelé aussi récepteur, définie par exemple par une butée, le dispositif peut encore parcourir une surcourse, afin de garantir que l'actionnement du côté du récepteur est entièrement réalisé. Cette surcourse est absorbée par le premier ressort.

La course totale de ce dispositif de commande se décompose en trois phases : une première phase de compensation de course morte, une phase active et une phase de surcourse.

Le dispositif de commande selon l'invention permet donc de remplir deux fonctions distinctes : d'une part il permet de régler automatiquement la tension du câble au cours de la première phase et d'autre part il permet de garantir un bon fonctionnement du récepteur en autorisant une surcourse.

Dans une forme de réalisation préférée, le tube guide comporte un fond muni d'un passage pour le câble et contre lequel prend appui le second ressort, l'extrémité du câble ou de la gaine se déplaçant dans le tube guide du côté de la butée opposé au fond.

L'invention propose aussi une forme de réalisation pour le boîtier, selon laquelle le boîtier est un boîtier cylindrique présentant un fond muni d'une ouverture permettant le passage du tube guide, le tube guide comporte deux butées extérieures, une de chaque côté du fond du boîtier, et le premier ressort prend appui sur la butée du tube guide se trouvant à l'intérieur du boîtier et sur le fond du boîtier, l'autre butée du tube guide servant de surface d'appui au fond du boîtier en position de repos.

Dans cette forme de réalisation, pour obtenir un montage sûr, la butée extérieure du tube guide se trouvant à l'intérieur du boîtier est constituée par un anneau élastique monté sur le tube guide.

De cette façon, si en fin de surcourse par exemple, une charge trop importante est exercée sur le dispositif, l'anneau élastique se casse et sert de fusible, les autres pièces du dispositif restant intactes. De plus, en cas de casse de l'anneau élastique, le dispositif est rappelé dans sa position de repos et ne risque pas de rester dans une position où l'organe à commander est actionné.

De toute façon, l'invention sera bien comprise à l'aide de la description qui suit, en référence au dessin schématique annexé, représentant à titre d'exemple non limitatif une forme de réalisation préférée.
Figures 1 à 4 sont des vues en coupe longitudinale de cette forme de réalisation d'un dispositif de commande selon l'invention, montrant celui-ci dans quatre position de fonctionnement, et
Figure 5 est une variante de montage du dispositif représenté aux figures 1 à 4.

Le dispositif représenté au dessin comporte un émetteur 2 et un récepteur 4.

Le récepteur 4 est modélisé par une masse 6 se déplaçant entre deux butées 8 et 10 et par un ressort de rappel 12 rappelant la masse 6 dans une position de repos contre la butée 8.

Le récepteur 4 est relié à l'émetteur 2 par un câble 14 coulissant dans une gaine 16. L'extrémité du câble du côté du récepteur est reliée à la masse 6 et l'extrémité du câble côté émetteur porte un bouton terminal 18.

L'émetteur 2 comporte un tube guide 20, un boîtier 22, un premier ressort 24, un second ressort 26 et un anneau élastique 28.

Le tube guide 20 reçoit l'extrémité du câble 14 munie de son bouton terminal 18. Ce tube est sensiblement cylindrique circulaire. Il présente un épaulement 30 sur sa surface intérieure, la partie du tube de section la plus petite se trouvant côté récepteur. Les sections intérieures du tube guide 20 sont telles que le bouton terminal 18 du câble peut coulisser librement dans la partie de plus grande section, mais ne peut pas passer dans celle de section moindre, l'épaulement 30 constituant ainsi une butée pour le bouton terminal 18. L'extrémité du tube guide 20 se trouvant du côté récepteur comporte un fond 32 présentant une ouverture centrale pour permettre le passage du câble 14.

Le boîtier 22 est de forme cylindrique circulaire et présente un fond 34 côté récepteur. Ce fond 34 comporte une ouverture centrale permettant le passage du tube guide 20. Une languette 36 est réalisée sur le boîtier 22 du côté opposé au fond 34 et permet d'agir sur l'émetteur 2. Une tirette, une poignée non représentée au dessin, ou similaire permet d'agir sur l'émetteur.

Le premier ressort 24 est monté entre le boîtier 22 et le tube guide 20. L'anneau élastique 28 est monté sur le tube guide 20, à l'extérieur de celui-ci, à proximité de son extrémité éloignée du récepteur. Le ressort 24 prend appui entre le fond 34 du boîtier et l'anneau élastique 28. Ce premier ressort 24 est précontraint et, le boîtier 22 étant fixe, il agit sur le tube guide 20 dans le sens éloignant ce dernier du récepteur 4. Une butée extérieure 38 est prévue pour limiter la course du tube guide 20 dans le boîtier. Cette butée 38 fait corps avec le tube guide 20.

Le second ressort 26 prend appui d'une part sur le fond 32 du tube guide 20 et d'autre part sur le bouton terminal 18 du câble. Il agit dans le sens tendant à éloigner le bouton terminal 18 du récepteur 4, c'est-à-dire qu'il agit dans le sens de provoquer une tension sur le câble 14. La raideur de ce second ressort 26 est sensiblement inférieure à celle du premier ressort 24. En fait, la raideur du premier ressort 24 est supérieure à la raideur du ressort de rappel 12, elle même supérieure à la raideur du second ressort 26.

Le fonctionnement de ce dispositif est décrit ci-après.

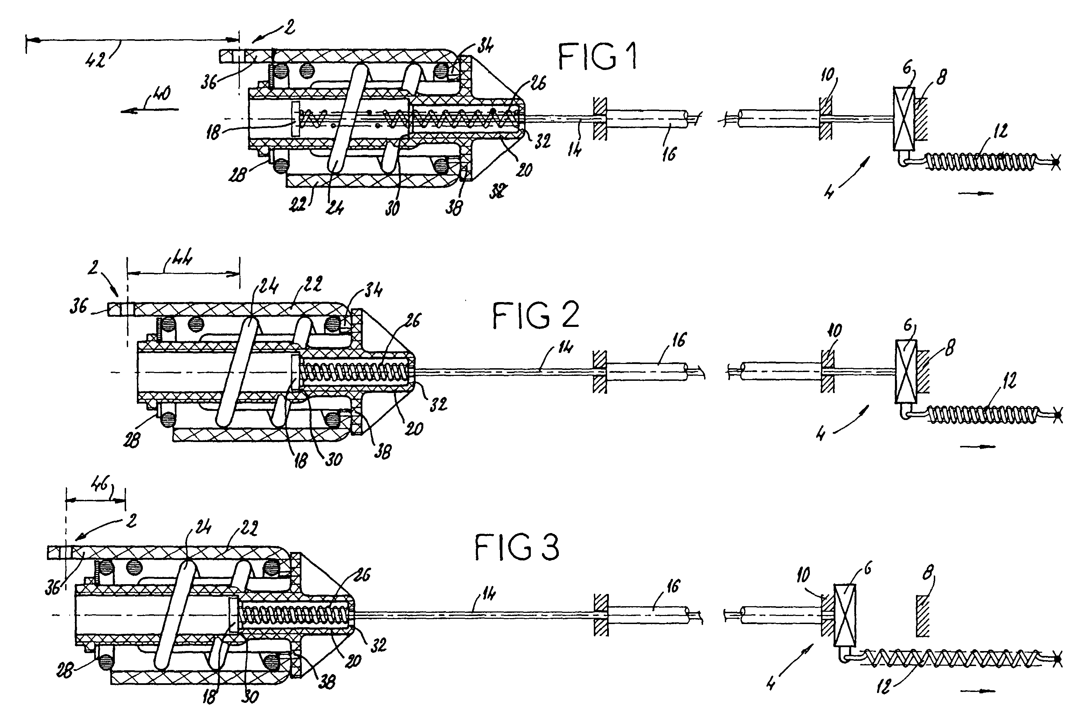

La figure 1 représente le dispositif selon l'invention au repos. La masse 6 est en appui contre la butée 8 du côté du récepteur et du côté de l'émetteur, le fond 34 du boîtier se trouve contre la butée 38 extérieure du tube guide et le bouton terminal 18 du câble se trouve dans la zone de plus grande section du tube guide 20. Le second ressort 26 agit sur le câble afin que ce dernier soit toujours sous tension.

En tirant sur la languette 36, dans le sens indiqué par la flèche 40, le ressort de plus faible raideur, c'est-à-dire le second ressort 26, est tout d'abord comprimé. C'est la phase dite de compensation de course morte. Pendant cette phase, la tension du câble augmente. L'ensemble formant l'émetteur se déplace jusqu'à ce que le bouton terminal 18 vienne en butée contre l'épaulement 30. La course totale de l'émetteur est représenté par une ligne de cote 42 (figure 1). La course morte est représentée par une ligne de cote 44 sur la figure 2. Dans cette position (figure 2), le câble se trouve dans un état de tension imposé par la longueur du second ressort 26. Cette tension est constante pour tout actionnement du dispositif puisque la force exercée par le ressort 26 dépend de sa longueur et que celle-ci est à chaque fois égale à la distance séparant le fond 32 du tube guide de l'épaulement 30.

En continuant à tirer sur la languette 36, le second ressort 26 ne pouvant plus être comprimé, c' est le ressort 12 qui est sollicité. La masse 6 se déplace alors, quitte la butée 8 et vient contre la butée 10 (figure 3). Cette phase est appelée course utile et est schématisée par une ligne de cote 46 sur la figure 3. C'est pendant cette phase du déplacement qu'est actionné le récepteur. Du côté de l'émetteur 2, rien n'est modifié. L'émetteur tout entier se déplace d'une distance correspondant au déplacement de la masse 6.

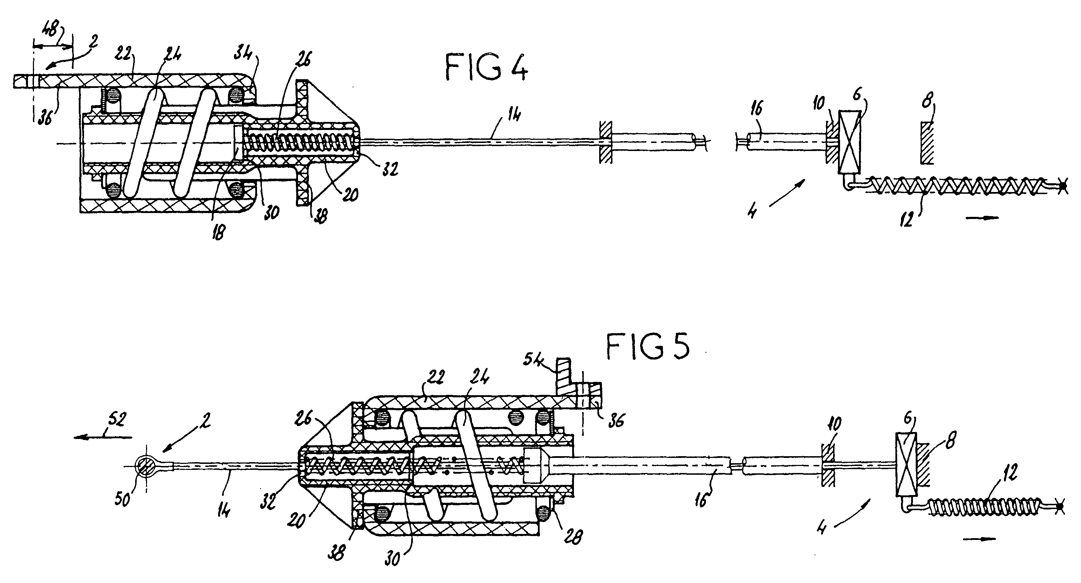

La dernière phase est appelée surcourse. Une ligne de cote 48 sur la figure 4 schématise cette surcourse. Durant cette phase, le premier ressort 24 est comprimé et le tube guide 20 se déplace dans le boîtier 22.

La course totale de l'émetteur 2 se décompose donc en une course morte au cours de laquelle s'effectue automatiquement la mise à une tension prédéterminée du câble 14, une course utile au cours de laquelle le récepteur 4 est mis en mouvement et une surcourse permettant de garantir que la course utile est entièrement réalisée.

Pour revenir en position de repos (figure 1) à partir de la position de fin de course (figure 4), il suffit de relâcher la traction exercée sur le boîtier 22 et sa languette 36. Les trois ressorts 12,24,26 assurent le retour dans la position de repos.

Une variante de montage du dispositif des figures 1 à 4 est représentée sur la figure 5. Les figures 1 à 4 illustrent un montage dit sur câble alors que la figure 5 illustre un montage sur gaine.

On retrouve dans cette variante les mêmes pièces que dans les figures précédentes. Les références restent donc inchangées.

La différence de montage avec les figures précédentes est que l'émetteur n'est pas monté sur le câble 14 mais sur sa gaine 16. Il suffit pour cela de retourner l'émetteur. Les fonds 32 et 34 des tube guide 20, respectivement boîtier 22, ne sont plus orientés vers le récepteur mais du côté opposé au récepteur. En outre, le second ressort ne prend pas appui sur le bouton terminal du câble mais sur l'extrémité de la gaine 16.

Dans ce montage sur gaine, le boîtier 22 est fixé à une butée 54 par l'intermédiaire de la languette 36. Le câble 14 est accroché côté récepteur à la masse 6 et est par exemple muni à son extrémité côté émetteur d'un oeillet 50.

Pour agir sur la masse 6 et la faire passer de la butée 8 vers la butée 10, il faut agir sur l'oeillet 50 du boîtier 22 dans le sens indiqué par la flèche 52. Le fonctionnement est alors semblable à celui décrit en référence au montage sur câble.

Le second ressort est tout d'abord comprimé jusqu'à ce que l'extrémité de la gaine vienne en butée contre l'épaulement 30. Puis le câble 14 se déplace dans la gaine 16 et tire la masse 6 à l'encontre de la force exercée par le ressort 12. Enfin, lorsque la masse 6 bute contre la butée 10, en continuant la traction sur l'oeillet 50, le tube guide 20 coulisse par rapport au boîtier 22 à l'encontre de la force exercée par le premier ressort 24.

On retrouve donc dans ce montage les mêmes fonctions de compensation de course morte et de surcourse que dans le montage sur câble.

Ces deux variantes de montage sont des montages de sécurité. En effet, si un effort trop important est exercé sur l'émetteur 2 et provoque une rupture, cette dernière se produit au niveau de l'anneau élastique 18 qui est le point "faible" du montage. Dans ce cas, aucune commande n'est possible et le récepteur 4 reste dans la position de repos, ou retourne dans celle-ci si la rupture se produit en cours d'utilisation.

Comme il va de soi, l'invention ne se limite pas à la forme de réalisation décrite ci-dessus à titre d'exemple non limitatif ; elle en embrasse au contraire toutes les variantes.

## Revendications

1. Dispositif de compensation pour une commande à distance mécanique, comportant un câble (14) coulissant dans une gaine (16), un tube guide (20) dans lequel passe le câble, un boîtier (22) pouvant coulisser par rapport au tube guide et un premier ressort (24) précontraint monté entre le boîtier (22) et le tube guide (20), **caractérisé en ce qu'**un second ressort (26), de raideur sensiblement inférieure à celle du premier ressort (24), agit entre le câble (14) ou sa gaine (16) et le tube guide (20), et **en ce qu'**une butée (30) est prévue à l'intérieur du tube guide pour l'extrémité (18) du câble ou de la gaine (16).

2. Dispositif de compensation selon la revendication 1, **caractérisé en ce que** le tube guide (20) comporte un fond (32) muni d'un passage pour le câble (14) et contre lequel prend appui le second ressort (26), l'extrémité (18) du câble ou de la gaine (16) se déplaçant dans le tube guide (20) du côté de la butée (30) opposé au fond (32).

3. Dispositif de compensation selon la revendication 1 ou 2, **caractérisé en ce que** le boîtier (22) est un boîtier cylindrique présentant un fond (34) muni d'une ouverture permettant le passage du tube guide (20), **en ce que** le tube guide (20) comporte deux butées (28,38) extérieures, une de chaque côté du fond du boîtier, et **en ce que** le premier ressort (24) prend appui sur la butée (28) du tube guide se trouvant à l'intérieur du boîtier (22) et sur le fond du boîtier, l'autre butée (38) du tube guide servant de surface d'appui au fond (34) du boîtier en position de repos.

4. Dispositif de compensation selon la revendication 3, **caractérisé en ce que** la butée extérieure du tube guide se trouvant à l'intérieur du boîtier est constituée par un anneau élastique (28) monté sur le tube guide (20).

## Claims

1. Compensation device for a mechanical remote control, comprising a cable (14) sliding in a cover (16), a guide tube (20) inside of which the cable passes, a casing (22) able to slide with respect to the guide tube and a first pre-stressed spring (24) fitted between the casing (22) and the guide tube (20), **characterized in that** a second spring (26) of stiffness substantially less than that of the first spring (24), acts between the cable (14) or its cover (16) and the guide tube (20), and **in that** a stop (30) is provided inside the guide tube for the end (18) of the cable or of the cover (16) .

2. Compensation device according to claim 1, **characterized in that** the guide tube (20) comprises a bottom (32) provided with a passageway for the cable (14) and against which the second spring (26) bears, the end (18) of the cable or of the cover (16) moving inside the guide tube (20) at the end nearest the stop (30) opposite to that of the bottom (32).

3. Compensation device according to claim 1 or 2, **characterized in that** the casing (22) is a cylindrical casing having a bottom (34) provided with an opening allowing the passage of the guide tube (20), **in that** the guide tube (20) comprises two external stops (28, 38), one on each side of the bottom of the casing, and **in that** the first spring (24) bears on the stop (28) of the guide tube that is inside the casing (22) and on the bottom of the casing, the other stop (38) of the guide tube serving as a bearing surface for the bottom (34) of the casing in the rest position.

4. Compensation device according to claim 3, **characterized in that** the external stop of the guide tube that is inside the casing consists of an elastic ring (28) mounted on the guide tube (20).

## Patentansprüche

1. Ausgleichsvorrichtung für eine mechanische Fernsteuerung, umfassend ein in einem Mantel gleitendes Kabel (14), ein Führungsrohr (20), durch welches das Kabel verläuft, ein Gehäuse (22), das bezüglich des Führungsrohrs gleitverschiebbar ist, und eine erste vorgespannte Feder (24), die zwischen dem Gehäuse (22) und dem Führungsrohr (20) angeordnet ist,
**dadurch gekennzeichnet, dass** eine zweite Feder (26), die wesentlich weicher ist als die erste Feder (24), zwischen dem Kabel (14) oder seinem Mantel (16) und dem Führungsrohr (20) wirkt, und dass im Inneren des Führungsrohrs für das Ende (18) des Kabels oder des Mantels (16) ein Anschlag (30) vorgesehen ist.

2. Ausgleichsvorrichtung nach Anspruch 1,
**dadurch gekennzeichnet, dass** das Führungsrohr (20) einen Boden (32) umfasst, der mit einem Durchgang für das Kabel (14) ausgestattet ist und an dem die zweite Feder (26) anliegt, wobei sich das Ende (18) des Kabels oder des Mantels (16) auf der dem Boden (32) gegenüberliegenden Seite des Anschlags (30) in dem Führungsrohr (20) verschiebt.

3. Ausgleichsvorrichtung nach Anspruch 1 oder 2.
**dadurch gekennzeichnet, dass** das Gehäuse (22) ein zylindrisches Gehäuse mit einem Boden (34) ist, der mit einer Öffnung ausgestattet ist, die den Durchgang des Führungsrohrs (20) gestattet, dass das Führungsrohr (20) zwei äußere Anschläge (28,38) umfasst, und zwar einen an jeder Seite des Gehäusebodens, und dass die erste Feder (24) an dem Anschlag (28) des Führungsrohrs, welches sich im Inneren des Gehäuses (22) befindet, und an dem Boden des Gehäuses anliegt, wobei der andere Anschlag (38) des Führungsrohrs in Ruhestellung dem Boden (34) des Gehäuses als Anliegefläche dient.

4. Ausgleichsvorrichtung nach Anspruch 3,
**dadurch gekennzeichnet, dass** der äußere Anschlag des Führungsrohrs, das sich im Inneren des Gehäuses befindet, von einem elastischen Ring (28) gebildet ist, der auf dem Führungsrohr (20) angeordnet ist.
